# EUROPEAN PATENT APPLICATION

(11) **EP 1 274 240 A2**
(43) Date of publication of application: **08.01.2003**
(21) Application number: 02254304.5
(22) Date of filing: 20.06.2002
(51) Int. Cl.: H04N 5/782, H04N 7/16

(54) **Commercial cut apparatus and method**

(30) Priority: 04.07.2001 JP 2001203211
(71) Applicant: Pioneer Corporation, Meguro-ku, Tokyo (JP)
(72) Inventor: Okajima, Takahiro, Pioneer Corp. Tokorozawa Works, Tokorozawa-shi, Saitama (JP); Bessho, Manabu, Pioneer Corp. Tokorozawa Works, Tokorozawa-shi, Saitama (JP); Komatsu, Kazuyoshi, Pioneer Corp. Tokorozawa Works, Tokorozawa-shi, Saitama (JP); Tsunoi, Tomoaki, Pioneer Corp. Tokorozawa Works, Tokorozawa-shi, Saitama (JP); Sakamoto, Shinichiro., Pioneer Corp., Tokorozawa-shi, Saitama (JP); Hashimoto, Hiroaki, Pioneer Corp. Tokorozawa Works, Tokorozawa-shi, Saitama (JP)
(74) Representative: Haley, Stephen

(57) **Abstract**

In a recording-reproducing apparatus for recording a broadcast program, electronic program guide data distributed through a broadcast network is stored in an electronic program guide data storage area 8b of a hard disk, etc. When the user, etc., specifies any desired broadcast program, a system controller 9 retrieves the attribute of the specified broadcast program from the electronic program guide data stored in the electronic program guide data storage area 8b, determines whether or not commercials can be cut for the specified broadcast program based on the retrieved attribute, and displays the determination result on a display section 15 of a remote controller 14. If the displayeddetermination result indicates that commercials can be cut and the user, etc., gives a command to cut commercials, commercials are cut; if the user, etc., gives a command not to cut commercials, the broadcast program is recorded in a record area 8a of the hard disk, etc.

## Description

This invention relates to a commercial cut apparatus, a commercial cut method, a recording-reproducing apparatus comprising a commercial cut function, and a commercial cut program for cutting commercials contained in television broadcasts, etc., for example.

A video cassette recorder (VTR) is known as a recording-reproducing apparatus for recording content of a broadcast program, etc., distributed by a television broadcast.

Some video cassette recorders in related arts comprise a "commercial cut function" for cutting distributed commercials contained in a broadcast program and recording only the broadcast program. The "commercial cut function" detects change in a sound multiplex signal provided by receiving airwaves and assumes that the change time points are commercial start and end time points for stopping and restarting recording, thereby recording no commercials.

Specifically, the presence or absence of "bilingual" is detected in a sound multiplex flag, the time point at which the sound multiplex flag is changed from "bilingual" to "non-bilingual" is assumed to be the commercial start time point, the time point at which the sound multiplex flag is changed from "non-bilingual" to "bilingual" is assumed to be the commercial end time point, and recording in the time period from the commercial start time point to end time point is stopped. Accordingly, the commercial cut for recording only the broadcast program without recording commercials is accomplished.

By the way, the commercial cut function provided for the recording-reproducing apparatus in the related art is a convenient function for the user, etc., who wants to record a movie, etc., distributed as a broadcast program and view the movie, etc., with no commercials.

However, if the user, etc., gives a record start command of any desired program with specification of the commercial cut function or programs the recording-reproducing apparatus to record any desired program with specification of the commercial cut function, the user, etc., cannot know whether or not the program is recorded with commercials cut until the user, etc., reproduces the recorded video after completion of the recording. Thus, commercials may be recorded against the will of the user, etc.

That is, with the commercial cut function described above, when commercials having attributes of "non-bilingual" in a program having the attribute of a "bilingual" broadcast are distributed, change in the attributes is detected, whereby the commercial start and end time points are detected. However, the user, etc., does not have proper means for previously checking to see if the desired program is a "bilingual" broadcast program and thus the user, etc., gives a commercial cut command to the program which is not a "bilingual" broadcast program for recording the program or programming the recording-reproducing apparatus to record the program, resulting in recording commercials against the will of the user, etc.; this is a problem.

It is therefore an object of the invention to provide a commercial cut apparatus, a commercial cut method, a recording-reproducing apparatus comprising a commercial cut function, and a commercial cut program for making it possible to cut commercials appropriately, for example.

To the end, according to the invention, there is provided a commercial cut apparatus and a commercial cut method for removing commercials contained in content provided by an information providing source, wherein distribution schedule information of the content provided by the information providing source or another information providing source is acquired, the acquired distribution schedule information is stored, and when content scheduled to be distributed based on the distribution schedule information is specified, information indicating the attribute of the specified content is retrieved from the stored distribution schedule information and is provided.

According to the commercial cut apparatus and the commercial cut method of the invention, when the user, etc., attempts to record any desired content and specifies the desired content, the attribute of the specified content is retrieved from the previously recorded distribution schedule information and is provided. Accordingly, the attribute information can be provided for the user, etc., as information to determine whether or not commercials can be cut and whether or not commercials are to be cut, and the convenience of the user, etc., can be improved.

To the end, according to the invention, there is provided a recording-reproducing apparatus for removing commercials contained in content provided by an information providing source and recording the content in record section, the recording-reproducing apparatus comprising acquisition section for acquiring distribution schedule information of the content provided by the information providing source or another information providing source, storage section for storing the distribution schedule information acquired by the acquisition section, and control section, when a command to record or preselect for recording content scheduled to be distributed based on the distribution schedule information is given, for retrieving information indicating the attribute of the content commanded to be recorded or preselected for recording from the distribution schedule information stored in the storage section and providing the information indicating the attribute.

According to the described recording-reproducing apparatus, when the user, etc., attempts to record any desired content and specifies the desired content, the attribute of the specified content is retrieved from the previously recorded distribution schedule information and is provided. Accordingly, the attribute information can be provided for the user, etc., as information to determine whether or not commercials can be cut and whether or not commercials are to be cut, and the convenience of the user, etc., can be improved.

In the recording-reproducing apparatus, the control section retrieves the information indicating the attribute of the content commanded to be recorded or preselected for recording from the distribution schedule information stored in the storage section, determines whether or not commercials can be cut based on the attribute, and shows the determination result as to whether or not commercials can be cut.

According to the described recording-reproducing apparatus, the control section determines whether or not commercials can be cut based on the attribute of the content, and shows the determination result, so that the convenience of the user, etc., can be improved.

In the recording-reproducing apparatus, when the determination result indicating that commercials can be cut is shown and a command to cut commercials is given in response to the shown determination result, the control section causes the record section to remove commercials in the content commanded to be recorded or preselected for recording when recording the content.

According to the described recording-reproducing apparatus, when the control section determines that commercials can be cut and shows the determination result and the user, etc., gives a command to cut commercials in response to the shown determination result, the control section causes the record section to record the content with commercials removed. Thus, the user is prompted to specify whether or not commercials are to be removed, the range of choices of the operation of the user, etc., is extended, and the convenience of the user, etc., can be improved.

To the end, according to the invention, there is provided a commercial cut program having program section for removing commercials contained in content provided by an information providing source, the program section being executed by a computer, the commercial cut program comprising first program section for acquiring distribution schedule information of the content provided by the information providing source or another information providing source, second program section for storing the distribution schedule information acquired by the first program section in storage section, and third program section, when content scheduled to be distributed based on the distribution schedule information is specified, for retrieving information indicating the attribute of the specified content from the distribution schedule information stored in the storage section and providing the information indicating the attribute.

The commercial cut program is distributed to (downloaded into) an apparatus comprising a microprocessor through the Internet, etc., or a storage medium recording the commercial cut program is provided for installing the commercial cut program in an apparatus comprising a microprocessor, whereby the apparatus can be provided with the commercial cut function and the commercial cut function of the invention can be provided for a wide range of users, etc.

### In the Drawings:

FIG. 1 is a block diagram to show the configuration of a recording-reproducing apparatus of an embodiment of the invention;
FIG. 2 is a flowchart to describe the operation of the recording-reproducing apparatus of the embodiment of the invention;
FIG. 3 is a flowchart to further describe the operation of the recording-reproducing apparatus of the embodiment of the invention;
FIG. 4 is a flowchart to further describe the operation of the recording-reproducing apparatus of the embodiment of the invention;
FIG. 5 is a flowchart to further describe the operation of the recording-reproducing apparatus of the embodiment of the invention; and
FIG. 6 is a flowchart to further describe the operation of the recording-reproducing apparatus of the embodiment of the invention.

Referring now to the accompanying drawings, there is shown a preferred embodiment of the invention. A recording-reproducing apparatus for receiving airwaves distributed through a broadcast network from a broadcast station of an information providing source, recording and reproducing abroadcastprogram (content) provided by receiving the airwaves, the recording-reproducing apparatus also comprising a commercial cut function will be discussed as an embodiment of the invention. A recording-reproducing apparatus for handling digital multichannel television airwaves as airwaves will be discussed.

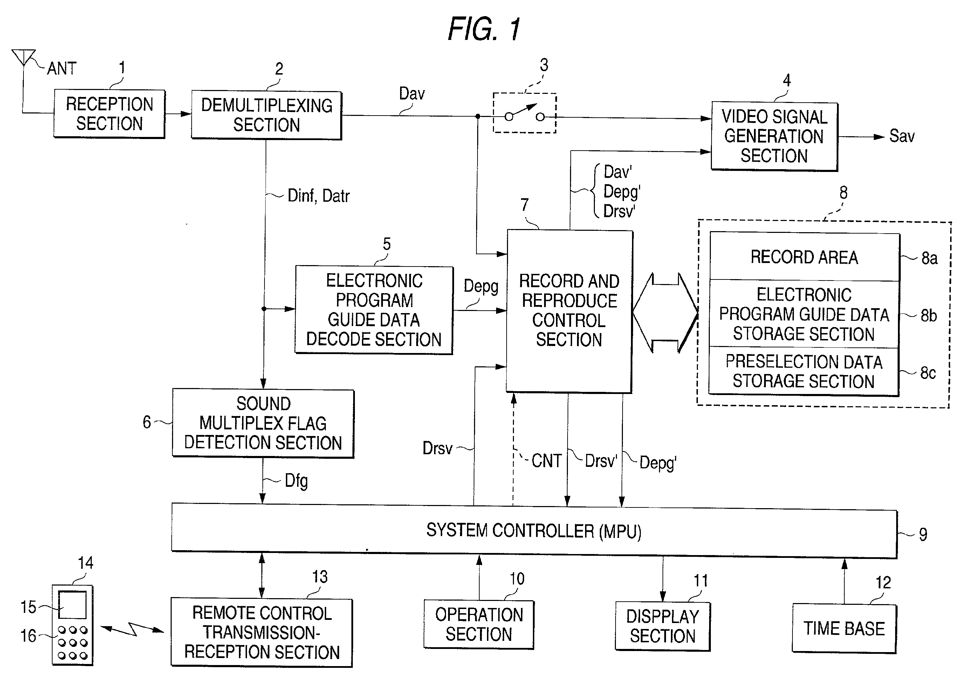

FIG. 1 is a block diagram to show the configuration of the recording-reproducing apparatus. In the figure, the recording-reproducing apparatus receives airwaves distributed from a broadcast station and coming from a ground station or a satellite at an antenna ANT and RF-demodulates a high-frequency signal provided by receiving the airwaves by a reception section 1, thereby converting into digital multichannel television data in a frequency band that can undergo signal processing, and supplies the digital multichannel television data to a demultiplexing section 2.

The demultiplexing section 2 separates the digital multichannel television data into video data and audio data, which will be hereinafter referred to as video audio data Dav, data of an electronic program guide, which will be hereinafter referred to as electronic program guide data Dinf, and attribute data Datr indicating the attribute of stereo, mono, "bilingual" broadcast, etc., for output.

When the broadcast station channel is specified from a system controller 9 (described later), the demultiplexing section 2 extracts and outputs the video audio data Dav and the attribute data Datr of the specified channel. The electronic program guide data Dinf is automatically extracted from the digital multichannel television data and is output.

The electronic program guide data is electronic program guide (EPG) data compliant with the digital multichannel television broadcast standard and distributed supplementary to the video audio data; it is standardized for providing the data for the user, etc., as schedule information of broadcast programs scheduled to be distributed, such as the titles, the attribute, the broadcast schedule dates, the broadcast start and end times, the broadcast stations, and the categories of the programs, and details for introducing the contents of the programs, is distributed as supplementary information.

The broadcast program attribute is information indicating that the broadcast is stereo, mono, "bilingual" broadcast.

A video signal generation section 4 is connected to the demultiplexing section 2 through a switch circuit 3. In addition, an electronic program guide data decode section 5, a sound multiplex flag detection section 6, and a record and reproduce control section 7 are connected to the demultiplexing section 2. The video signal generation section 4 and a record section 8 are connected to the record and reproduce control section 7.

Although described later in detail, the record section 8 is implemented as a hard disk drive or a DVD drive comprising a hard disk, a DVD (Digital Versatile Disc), or the like onto which data can be rewritten as a storage medium and a recording area 8a, an electronic program guide data storage area 8b, and a preselection data storage area 8c are allocated to the storage medium. Data write into the recording area 8a, the electronic program guide data storage area 8b, and the preselection data storage area 8c and read of already recorded data are controlled by the record and reproduce control section 7 upon reception of instructions of a control signal CNT from the system controller 9.

The switch circuit 3 performs the switch operation upon reception of an instruction from the system controller 9. If the user, etc., wants to view the broadcast program being received in real time and operates an operation section 10 (described later) to give a command for viewing the broadcast program being received to the system controller 9, the system controller 9 causes the switch circuit 3 to turn on the contact for transferring the video audio data Dav output from the demultiplexing section 2 to the video signal generation section 4 in response to the user's command.

If the user, etc., operates the operation section 10 to give a command for not viewing the broadcast program in real time to the system controller 9, the system controller 9 causes the switch circuit 3 to turn off the contact for shutting off transferring the video audio data Dav to the video signal generation section 4 in response to the user's command.

When the video audio data Dav is supplied from the demultiplexing section 2 through the switch circuit 3, the video signal generation section 4 converts the video audio data Dav into a signal Sav such as a composite signal and a digital video signal for video reproduce and audio reproduce, and outputs and supplies the signal Sav to a display and a loudspeaker (not shown) for performing video reproduce and audio reproduce.

When video audio data Dav', electronic program guide data Depg', and preselection data Drsv' already recorded in the record section 8 are supplied through the record and reproduce control section 7 to the video signal generation section 4, the video signal generation section 4 converts the video audio data Dav', the electronic program guide data Depg', and the preselection data Drsv' into a signal Sav of a composite signal, a digital video signal, etc., and outputs the signal as it converts the video audio data Dav supplied from the demultiplexing section 2 into the signal Sav and outputs the signal.

When the video audio data Dav', the electronic program guide data Depg', or the preselection data Drsv' already recorded in the record section 8 is supplied through the record and reproduce control section 7 at the same time as the video audio data Dav is supplied from the demultiplexing section 2, the video signal generation section 4 generates and outputs a signal Sav of a composite signal, a digital video signal, etc., to display the video audio data Dav', the electronic program guide data Depg', or the preselection data Drsv' superposed on the video audio data Dav.

When a plurality of data pieces Dav, Dav', Depg', and Drsv' are supplied, the video signal generation section 4 generates the signal Sav of the composite signal, the digital video signal, etc., to display the data pieces as a plurality of pictures on one display screen. Displaying two or more pictures on one display screen is called "multidisplay."

The electronic program guide data decode section 5 is provided as acquisition section for acquiring electronic program guide data Dinf. When the electronic program guide data Dinf is output from the demultiplexing section 2, the electronic program guide data decode section 5 converts the electronic program guide data Dinf into OSD (on screen display) display data and supplies the provided data to the record and reproduce control section 7 as electronic program guide data Depg. When the electronic program guide data Depg is supplied to the record and reproduce control section 7, the record and reproduce control section 7 records the electronic program guide data Depg in the electronic program guide data storage area 8b of the record section 8. If electronic program guide data is already stored in the electronic program guide data storage area 8b, the already stored electronic program guide data is updated to the most recent electronic program guide data Depg supplied from the electronic program guide data decode section 5 so that the most recent electronic program guide data Depg is always stored in the electronic program guide data storage area 8b.

If the system controller 9 instructs the record and reproduce control section 7 to read out the electronic program guide data Depg already stored in the electronic program guide data storage area 8b, the record and reproduce control section 7 reads out the electronic program guide data Depg and supplies the data to the video signal generation section 4 and the system controller 9 as the electronic program guide data Depg' described above.

The sound multiplex flag detection section 6 determines whether or not the attribute data Datr supplied from the demultiplexing section 2 contains the attribute data indicating a "bilingual" broadcast, which will be hereinafter referred to as "bilingual" flag data. If the "bilingual" flag data is detected, the sound multiplex flag detection section 6 generates a detection signal Sfg indicating that the current broadcast being received is a "bilingual" broadcast, and supplies the signal to the system controller 9; if the "bilingual" flag data is not detected, the sound multiplex flag detection section 6 generates a detection signal Sfg indicating that the current broadcast being received is not a "bilingual" broadcast, and supplies the signal to the system controller 9.

The "bilingual" flag data is data compliant with the digital multichannel television broadcast standard and when the broadcast program is a "bilingual" broadcast, the data is sent accompanying the broadcast program.

The record and reproduce control section 7 controls writing and reading the electronic program guide data Depg into and from the electronic program guide data storage area 8b. In addition, in the record mode, the record and reproduce control section 7 records the video audio data Dav supplied from the demultiplexing section 2 in the record area 8a of the record section 8 as instructed from the system controller 9. In the reproduce mode, the record and reproduce control section 7 reads the video audio data Dav already recorded in the record area 8a and supplies the data to the video signal generation section 4 as the video audio data Dav' as instructed from the system controller 9.

Further, when the preselection data Drsv concerning the broadcast program to be preselected for recording is supplied from the system controller 9 to the record and reproduce control section 7, the record and reproduce control section 7 stores the preselection data Drsv in the preselection data storage area 8c of the record section 8. When the system controller 9 instructs the record and reproduce control section 7 to read out the preselection data Drsv already stored in the preselection data storage area 8c, the record and reproduce control section 7 reads the preselection data Drsv as Drsv' and supplies the data to the system controller 9 and the video signal generation section 4.

The system controller 9, which comprises a microprocessor (MPU) for executing a preset system program, sets the frequency of a local signal for causing the reception section 1 to perform RF demodulation (frequency conversion), specifies the reception channel for the demultiplexing section 2, controls the switch circuit 3, the video signal generation section 4, and the record and reproduce control section 7, and inputs the detection signal Dfg from the sound multiplex flag detection section 6 by the microprocessor.

Further, connected to the system controller 9 are an operation section 10 comprising a plurality of operation keys for the user, etc., to give any desired command to the system controller 9, a display section 11 implemented as a liquid crystal display, etc., for showing visual information for the user, etc., a time base 12 for performing time counting, and a remote control transmission-reception section 13 for conducting radio communications with a remote controller 14.

Although described in detail later, if the user, etc., preselects any desired program by operating a predetermined operation key of the operation section 10, the system controller 9 generates preselection data Drv containing information of the title and the broadcast start and end times of the preselected program using the electronic program guide data Depg' read from the electronic program guide data storage area 8b and stores the preselection data Drv in the preselection data storage area 8c, thereby registering preselection of recording. The broadcast start and end times in the preselection data Drsv are compared with the time count result of the time base 12 for conducting time management and the video audio data Dav of the preselected program is recorded in the record section 8a between the broadcast start and end times.

Whenever the most recent electronic program guide data Dinf is supplied from a broadcast station to the electronic program guide data decode section 5 and the most recent electronic program guide data Depg for OSD is updated in the electronic program guide data storage area 8b, the system controller 9 compares the most recent electronic program guide data Depg' with the preselection data Drsv' in the preselection data storage area 8c. If the preselection contents of the broadcast program specified by the preselection data Drsv' (particularly, the broadcast start and end times) differ from the contents of the distribution schedule of the broadcast program specified by the most recent electronic program guide data Depg', the system controller 9 determines that the schedule of the broadcast program is changed, and changes (corrects) the preselection data Drsv' based on the contents of the distribution schedule of the broadcast program specified by the most recent electronic program guide data Depg' to generate new preselection data Drsv containing information of new broadcast start and end times and stores the generated new preselection data Drsv in place of the old preselection data in the preselection data storage area 8c for updating.

As the preselection data Drsv' is thus corrected and updated based on the most recent electronic program guide data Depg', if the schedule of the program preselected by the user, etc., is changed, the system controller 9 enables the recording-reproducing apparatus to be programmed to record the program appropriately in response to the schedule change.

Further, when the user, etc., gives a record start command, the system controller 9 retrieves the electronic program guide data Depg' stored in the electronic program guide data storage area 8b through the record and reproduce control section 7 and checks the attribute of the broadcast program commanded to be recorded by the user, etc., thereby determining whether or not the broadcast program to be recorded is a "bilingual" broadcast.

If the system controller 9 determines that the broadcast program to be recorded is a "bilingual" broadcast, the system controller 9 displays a message of "you can cut commercials" indicating that commercials can be removed for recording on the display section 11 and if the user, etc., responds to the displayed message with a command "to cut commercials" through the operation section 10, the system controller 9 performs control so as to record the program with commercials cut.

If the user, etc., gives a command for preselecting any desired program for recording, the system controller 9 retrieves the electronic program guide data Depg' stored in the electronic program guide data storage area 8b through the record and reproduce control section 7 and checks the attribute of the broadcast program preselected for recording by the user, etc., thereby determining whether or not the broadcast program preselected for recording is a "bilingual" broadcast.

If the system controller 9 determines that the broadcast program preselected for recording is a "bilingual" broadcast, the system controller 9 displays a message of "you can cut commercials" indicating that commercials can be removed for recording on the display section 11 and if the user, etc., responds to the displayed message with a command "to cut commercials" through the operation section 10, the system controller 9 stores preselection data Drsv of the broadcast program preselected for recording with commercials cut in the preselection data storage area 8c. When the preselection time comes, the system controller 9 performs control so as to record the preselected broadcast program with commercials cut.

When the user, etc., gives the record start command or the program preselection command for recording, if the broadcast program to be recorded or preselected for recording is not a "bilingual" broadcast, a message of "you cannot cut commercials" is displayed on the display section 11 for informing the user, etc., that the program cannot be recorded with commercials cut.

If the user, etc., operates a predetermined option operation key of the operation section 10, the system controller 9 can instruct the video signal generation section 4 to generate a signal Sav for displaying the display contents similar to those of the display section 11 on the display screen for the user, etc.

The remote controller 14 comprises a transmission-reception section (not shown) for conducting radio communications with the remote control transmission-reception section 13, an operation section 16 similar to the operation section 10 previously described, and a display section 15 similar to the display section 11 previously described.

If the user, etc., operates the operation section 16, the user, etc., can give the same instruction as he or she operates the operation section 10 to the system controller 9 through the remote control transmission-reception section 13, and the same information as the display contents displayed on the display section 11 is sent from the system controller 9 through the remote control transmission-reception section 13 to the remote controller 14, so that the same display contents as the display section 11 are also displayed on the display section 15.

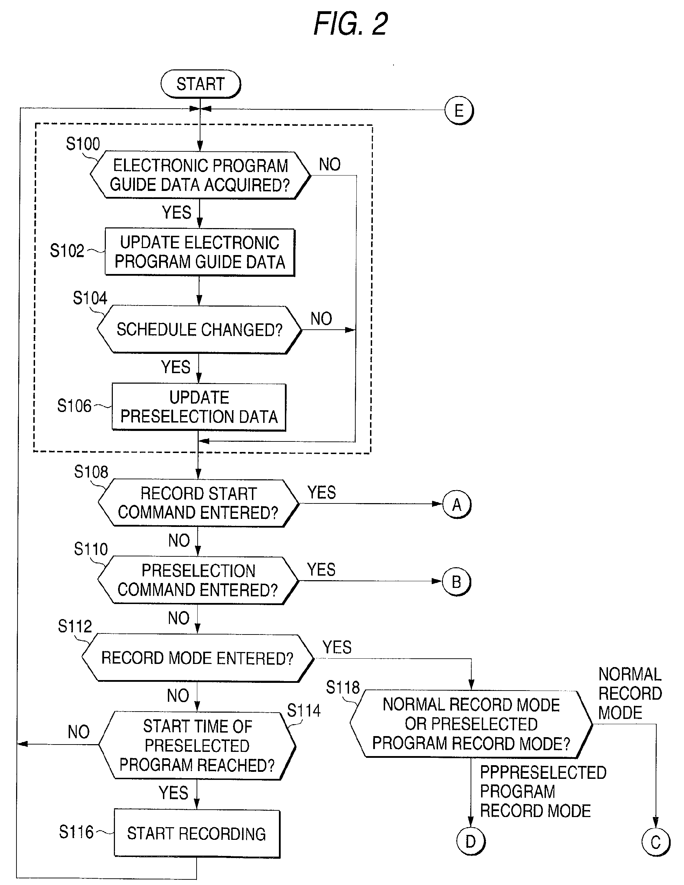

Next, the operation of the recording-reproducing apparatus will be discussed with reference to flowcharts of FIGS. 2 to 6. Since the remote controller 14 is provided with the similar functions to those of the operation section 10 and the display section 11 as described above, the operation of the recording-reproducing apparatus when the user, etc., operates the remote controller 14 to enter any desired command in the system controller 9 will be discussed. The description to follow assumes that the system controller 9 controls the operation as the main control unit.

The recording-reproducing apparatus is provided with a main power switch and a power switch. If the main power switch for receiving power supply from the commercial supply, a vehicle-installed battery, or the like is on, the recording-reproducing apparatus always receives airwaves in a standby state in which record or reproduce is not executed even if the power switch is off.

To begin with, at step S100 in FIG. 2, whether or not electronic program guide data Dinf is distributed is determined. If the electronic program guide data Dinf is distributed and the electronic program guide data decode section 5 acquires the data, control goes to step S102 and electronic program guide data Depg for OSD is stored in the electronic program guide data storage area 8b. If electronic program guide data is already stored in the electronic program guide data storage area 8b, the data is updated to the most recent electronic program guide data Depg.

Further, at step S104, if preselection data Drsv is stored in the preselection data storage area 8c, whether or not the schedule of the broadcast program specified by the preselection data Drsv is changed is determined based on the most recent electronic program guide data Depg. If the schedule of the preselected program is changed by the broadcast station, control goes to step S106 and new preselection data Drsv matched with the schedule change is prepared and is stored in the preselection data storage area 8c. That is, the old preselection data Drsv existing before the schedule change is erased and new preselection data Drsv based on schedule information of the broadcast program after the schedule change is prepared and is stored in the preselection data storage area 8c, whereby it is made possible to appropriately manage the time of the preselected program by the user, etc., for recording the preselected program if the distribution time of the broadcast program is changed.

If electronic program guide data Dinf is not distributed at step S100, steps S102 to S106 are skipped and control goes to step S108. If schedule change is not made at step S104, step S106 is skipped and control goes to step S108.

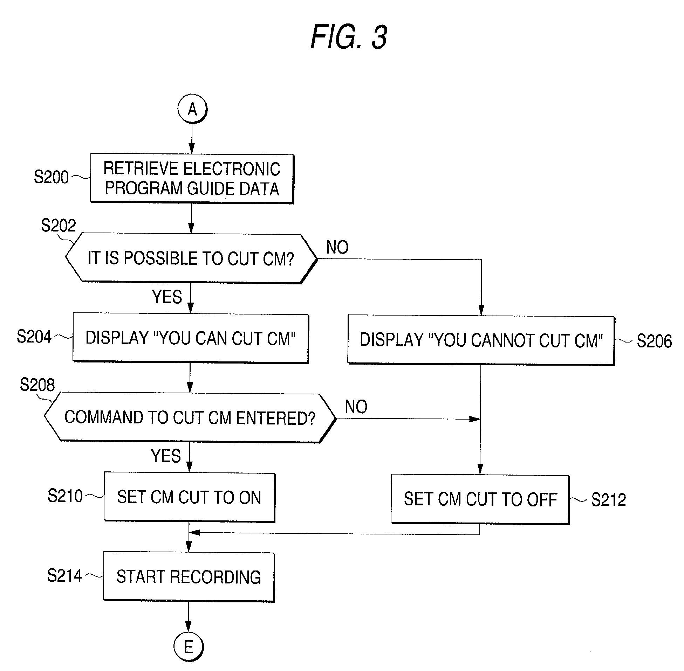

At step S108, whether or not the user, etc., enters a record start command is checked. If no record start command is entered, control goes to step S110; if a record start command is entered, control goes to step S200 shown in FIG. 3 described later.

The record start command mentioned here is a command to record the current broadcast program being distributed in real time rather than a command to preselect a program for recording. For convenience of the description, recording the current program being distributed in response to a record start command entered by the user, etc., will be referred to as "normal record mode" and recording the program preselected by the user, etc., will be referred to as "preselected program record mode."

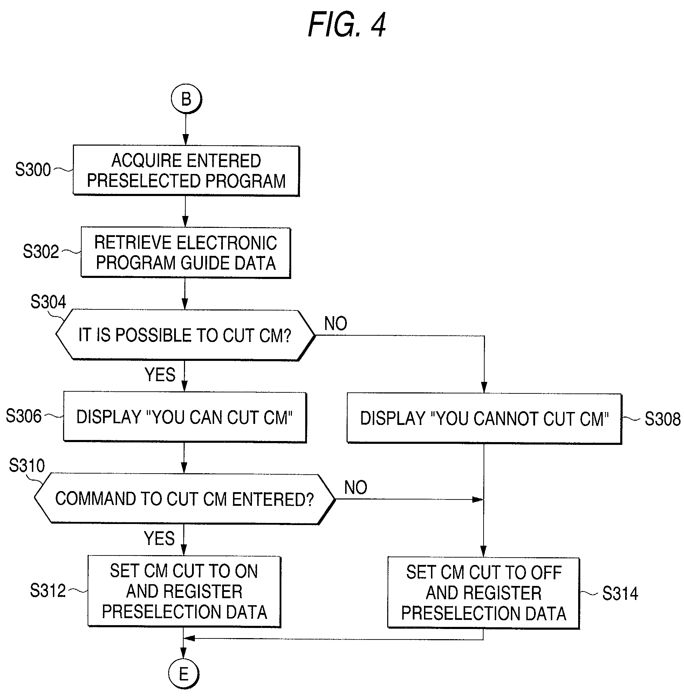

At step S110, whether or not the user, etc., enters a command to preselect a program for recording is checked. If a command to preselect a program for recording is entered, control goes to step S300 in FIG. 4 described later; if a command to preselect a program for recording is not entered, control goes to step S112.

At step S112, a determination is made as to whether or not the record mode is entered in which actual record is started after the record start command or the command to preselect a program for recording is entered.

If the record mode is not entered, control goes to step S114 and whether or not preselection data Drsv is stored in the preselection data storage area 8c is checked. If preselection data Drsv is stored, the broadcast start time of the preselected program specified by the preselection data Drsv is reached is determined. If the broadcast start time of the preselected program is not reached, the process starting at step S100 is repeated; if the broadcast start time of the preselected program is reached, control goes to step S116 and recording the preselected program is started and the process starting at step S100 is repeated.

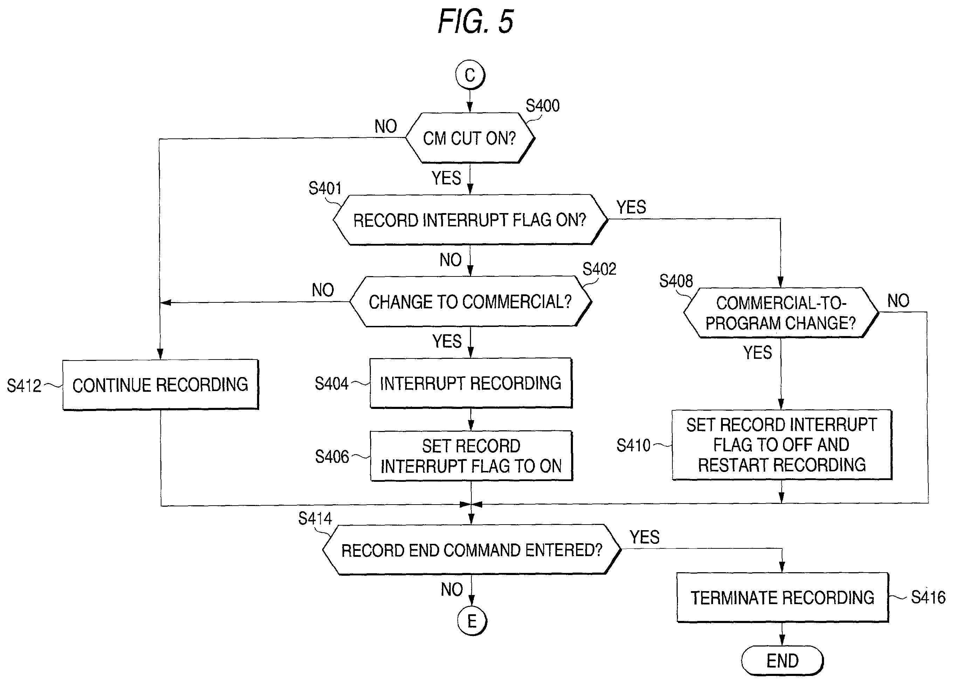

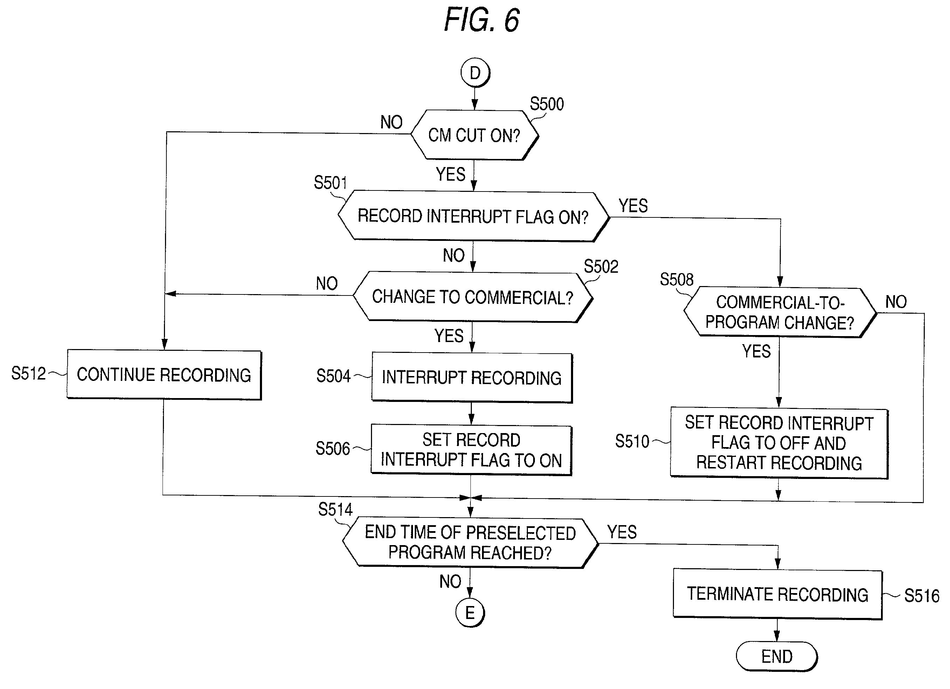

On the other hand, if it is determined at step S112 that the record mode is entered, control goes to step S118 and whether the record mode is "normal record mode" or "preselected program record mode" is checked. If the record mode is "normal record mode," control goes to step S400 in FIG. 5 described later; if the recordmode is "preselected program recordmode," control goes to step S500 in FIG. 6 described later.

The record mode is entered during the time between the instant at which recording is started and the instant at which the recording is ended in the "normal record mode" or "preselected program record mode." Therefore, if recording is started with the commercial cut function set by the user, etc., and is temporarily interrupted to record no commercials, it is determined that the record mode is entereduntil the program recording is complete.

The steps S100 to S118 described above mean processing of the main routine and the flowcharts of FIGS. 3 to 6 show processing of subroutines relative to the main routine processing. The subroutine processing will be discussed.

If it is determined at step S108 that the user, etc., enters a record start command as the "normal record mode," control goes to step S200 in FIG. 3.

At step S200, electronic program guide data Depg already stored in the electronic program guide data storage area 8b is retrieved and further at step S202, the attribute of the current program being broadcasted to be recorded is checked based on the electronic program guide data Depg. Whether or not the current program being broadcasted to be recorded is a "bilingual" broadcast is checked, whereby whether or not the broadcast program allows commercials to be cut is determined. That is, if the current program being broadcasted to be recorded is a "bilingual" broadcast, it is determined that commercials can be cut; if the current program being broadcasted to be recorded is not a "bilingual" broadcast, it is determined that commercials cannot be cut.

If it is determined that commercials can be cut, control goes to step S204 and a message of "you can cut CM" is displayed on the display section 15 of the remote controller 14; if it is determined that commercials cannot be cut, control goes to step S206 and a message of "you cannot cut CM" is displayed on the display section 15 of the remote controller 14.

Next at step S208, whether or not the user, etc., enters a command to cut commercials for recording the program in response to the message "you can cut CM" displayed at step S204 is checked. If the user, etc., enters a command to cut commercials for recording the program, control goes to step S210 and the commercial cut function is set to ON and then at step S214, recording in the "normal record mode" is started.

If the user, etc., enters a command not to cut commercials for recording the program at step S208, control goes to step S212 and the commercial cut function is set to OFF and then at step S214, recording in the "normal record mode" is started.

If the message "you cannot cut CM" is displayed at step S206, control goes to step S212 and the commercial cut function is set to OFF and then at step S214, recording in the "normal record mode" is started.

Upon completion of the process at steps S200 to S214 described above, control goes to the process starting at step S100 shown in FIG. 2.

Next, the operation of the recording-reproducing apparatus if the user, etc., enters a "preselected program record mode" command at step S110 will be discussed with reference to FIG. 4.

At step S300 in FIG. 4, the preselected program entered by the user, etc., is acquired. If the user, etc., operates a predetermined operation key of the operation section 16 of the remote controller 14, the system controller 9 instructs the record and reproduce control section 7 to read out the electronic program guide data Depg' stored in the electronic program guide data storage area 8b and supply the read-out electronic program guide data Depg' to the video signal generation section 4, thereby displaying the image of the electronic program guide. Further, the system controller 9 supplies the electronic program guide data Depg' through the remote control transmission-reception section 13 to the remote controller 14, thereby displaying the image of the electronic program guide on the display section 15. If the user, etc., operates an operation key to select any desired preselected program out of the electronic program guide displayed on the display section 15, etc., the system controller 9 acquires the preselected program.

Although not described in detail, when the electronic program guide is displayed on the display section 15 of the remote controller 14, a movable cursor is also displayed and the user, etc., can operate a predetermined cursor move operation key of the operation section 16 for moving the position of the displayed cursor. If the user, etc., selects any desired program entry from among the program entries listed in the electronic program guide, puts the cursor on the selectedprogram entry, and clicks on the cursor move operation key, the desired program can be easily preselected.

Next, at step S302, the electronic program guide data Depg' stored in the electronic program guide data storage area 8b is retrieved and the attribute of the preselected program specified by the user, etc., is checked.

Next, at step S304, whether or not the attribute of the preselected program is a "bilingual" broadcast is checked, whereby whether or not commercials can be cut is determined.

That is, if the program preselected for recording is a "bilingual" broadcast, it is determined that commercials can be cut; if the program preselected for recording is not a "bilingual" broadcast, it is determined that commercials cannot be cut.

If it is determined that commercials can be cut, control goes to step S306 and a message of "you can cut CM" is displayed on the display section 15 of the remote controller 14; if it is determined that commercials cannot be cut, control goes to step S308 and a message of "you cannot cut CM" is displayed on the display section 15 of the remote controller 14.

Next at step S310, whether or not the user, etc., enters a command to cut commercials for recording the program in response to the message "you can cut CM" displayed at step S306 is checked. If the user, etc., enters a command to cut commercials for recording the program, control goes to step S312 and the commercial cut function is set to ON and preselection data Drsv containing information for recording is stored in the preselection data storage area 8c.

If the user, etc., enters a command not to cut commercials for recording the program at step S310, control goes to step S314 and the commercial cut function is set to OFF and preselection data Drsv containing information for recording is stored in the preselection data storage area 8c.

If the message "you cannot cut CM" is displayed at step S308, control goes to step S314 and the commercial cut function is set to OFF and preselection data Drsv containing information for recording is stored in the preselection data storage area 8c.

Upon completion of the process at steps S300 to S314 described above, control goes to the process starting at step S100 shown in FIG. 2.

Thus, when the recording in the "normal record mode" shown in FIG. 3 is started or the recording in the "preselected program record mode" shown in FIG. 4 is performed and recording the preselected program is started at step S114 in FIG. 2, it is determined at step S112 that the record mode is entered. Further, if it is determined at step S118 that the record mode is the "normal record mode," control goes to the process shown in FIG. 5; if it is determined at step S118 that the record mode is the "preselected program record mode," control goes to the process shown in FIG. 6.

If control goes to step S400 shown in FIG. 5 during the "normal record mode, "whether or not the commercial cut function is set to ON is determined. If the commercial cut function is not set to ON, control goes to step S412 and the recording is continued and further at step S414, whether or not the user, etc., enters a record end command is determined. If the user, etc., does not enter a record end command, the process starting at step S100 shown in FIG. 2 is repeated. If it is determined at step S414 that the user, etc., enters a record end command, control goes to step S416 and the recording in the "normal record mode" is terminated.

If it is determined at step S400 that the commercial cut function is set to ON, control goes to step S401 and whether or not a record interrupt flag (describedlater) is ON is checked. If the record interrupt flag is ON, control goes to step S408; if the record interrupt flag is OFF, control goes to step S402.

At step S402, whether or not the detection signal Dfg output from the sound multiplex flag detection section 6 is changed from "bilingual" to "non-bilingual" is checked to see if change to commercials is made. This means that if a "non-bilingual" broadcast is received while a "bilingual" broadcast program is being recorded, it is determined that change to commercials is made.

If it is determined that change to commercials is made, control goes to step S404 and recording the video audio data Dav in the record area 8a is interrupted and further at step S406, the record interrupt flag is set to ON and then control goes to step S414.

At step S414, whether or not the user, etc., enters a record end command is determined. If the user, etc., does not enter a record end command, the process starting at step S100 shown in FIG. 2 is repeated. If it is determined at step S414 that the user, etc., enters a record end command, control goes to step S416 and the recording in the "normal record mode" is terminated.

If it is determined at step S402 that change to commercials is not made (NO), control goes to step S412 and the recording is continued and further steps S414 and S416 are performed.

If it is determined at step S401 that the record interrupt flag is set to ON, control goes to step S408 and whether or not commercial-to-program change is made is determined. That is, when the record interrupt flag is ON, if the detection signal Dfg output from the sound multiplex flag detection section 6 is changed from "non-bilingual" to "bilingual," it is determined that commercial-to-program change is made. If it is determined that commercial-to-program change is made, control goes to step S410 and the record interrupt flag is set to OFF and recording the video audio data Dav in the record area 8a is restarted. At step S414, whether or not the user, etc., enters a record end command is determined. If the user, etc., does not enter a record end command, the process starting at step S100 shown in FIG. 2 is repeated. If it is determined at step S414 that the user, etc., enters a record end command, control goes to step S416 and the recording in the "normal record mode" is terminated.

On the other hand, if it is not determined at step S408 that commercial-to-program change is made, control goes to step S414 with the recording interrupted and whether or not the user, etc., enters a record end command is determined. If the user, etc., does not enter a record end command, the process starting at step S100 shown in FIG. 2 is repeated. If it is determined at step S414 that the user, etc., enters a record end command, control goes to step S416 and the recording in the "normal record mode" is terminated.

Thus, the process shown in FIG. 5 is performed, whereby the recording in the "normal record mode" specified by the user, etc., is performed and further if the user, etc., enters a commercial cut command, only the program is recoded without recording commercials.

Next, the operation of the recording-reproducing apparatus if it is determined at step S118 that the record mode is the "preselected program record mode" and control goes to the process shown in FIG. 6 will be discussed.

At step S500 in FIG. 6, whether or not the commercial cut function is set to ON is determined. If the commercial cut function is not set to ON, control goes to step S512 and the recording is continued and further at step S514, whether or not the end time of the preselected program is reached is determined. If the end time is not reached, the process starting at step S100 shown in FIG. 2 is repeated. If it is determined at step S514 that the end time is reached, control goes to step S516 and the recording in the "preselected program record mode" is terminated.

If it is determined at step S500 that the commercial cut function is set to ON, control goes to step S501 and whether or not the record interrupt flag is ON is checked. If the record interrupt flag is ON, control goes to step S508; if the record interrupt flag is OFF, control goes to step S502.

At step S502, whether or not the detection signal Dfg output from the sound multiplex flag detection section 6 is changed from "bilingual" to "non-bilingual" is checked to see if change to commercials is made. This means that if a "non-bilingual" broadcast is received while a "bilingual" broadcast program is being recorded, it is determined that change to commercials is made.

If it is determined that change to commercials is made, control goes to step S504 and recording the video audio data Dav in the record area 8a is interrupted and further at step S506, the record interrupt flag is set to ON and then control goes to step S514. At step S514, whether or not the end time of the preselected program is reached is determined. If the end time is not reached, the process starting at step S100 shown in FIG. 2 is repeated. If it is determined at step S514 that the end time is reached, control goes to step S516 and the recording in the "preselected program record mode" is terminated.

If it is determined at step S502 that change to commercials is not made (NO), control goes to step S512 and the recording is continued and further steps S514 and S516 are performed.

If it is determined at step S501 that the record interrupt flag is set to ON, control goes to step S508 and whether or not commercial-to-program change is made is determined. That is, when the record interrupt flag is ON, if the detection signal Dfg output from the sound multiplex flag detection section 6 is changed from "non-bilingual" to "bilingual," it is determined that commercial-to-program change is made . If it is determined that commercial-to-program change is made, control goes to step S510 and the record interrupt flag is set to OFF and recording the video audio data Dav in the record area 8a is restarted. At step S514, whether or not the end time of the preselected program is reached is determined. If the end time is not reached, the process starting at step S100 shown in FIG. 2 is repeated. If it is determined at step S514 that the end time is reached, control goes to step S516 and the recording in the "preselected program record mode" is terminated.

On the other hand, if it is not determined at step S508 that commercial-to-program change is made, control goes to step S514 with the recording interrupted and whether or not the end time of the preselected program is reached is determined. If the end time is not reached, the process starting at step S100 shown in FIG. 2 is repeated. If it is determined at step S514 that the end time is reached, control goes to step S516 and the recording in the "preselected program record mode" is terminated.

Thus, the process shown in FIG. 6 is performed, whereby the recording in the "preselected program record mode" specified by the user, etc., is performed and further if the user, etc., enters a commercial cut command, only the program is recoded without recording commercials.

As described above, according to the recording-reproducing apparatus of the embodiment, when the user, etc., records a program or preselects a program for recording, the electronic program guide data Depg' stored in the electronic program guide data storage area 8b is retrieved and the attribute of the program to be recorded or the program preselected for recording is a "bilingual" broadcast is checked. If it is a "bilingual" broadcast, a message to the effect that commercials can be removed for recording the program is shown; if it is not a "bilingual" broadcast, a message to the effect that commercials cannot be removed for recording the program is shown. When the message to the effect that commercials can be removed for recording the program is shown, if the user, etc., gives a command to remove commercials for recording a program or preselecting a program for recording, the program is recorded or is preselected for recording following the command; if the user, etc., gives a command not to remove commercials for recording a program or preselecting a program for recording, the program is recorded or is preselected for recording without removing commercials following the command. Thus, information as to whether or not commercials can be cut for recording a program or preselecting a program for recording is presented to the user, etc., so that the problem of recording a program or preselecting a program for recording against the will of the user, etc., can be prevented from occurring, appropriate information can be provided for the user, etc., and the convenience of the user, etc., can be improved.

When the broadcast program allowing commercials to be cut, specified by the user, etc., is recorded or is preselected for recording, the recording-reproducing apparatus of the embodiment interrupts the record operation so as not to record commercials. However, the invention is not limited to the mode. Commercials may be recorded together with the broadcast program and after the recording is complete, the recorded commercials may be erased. This means that the recording-reproducing apparatus may comprise an edit function of erasing the recorded commercials after the recording is complete to record only the broadcast program. In this case, the system controller 9 determines whether or not commercials exist based on the detection signal Dfg output from the sound multiplex flag detection section 6 during recording, and manages the record addresses of the commercials recorded in the record area 8a. After the recording is complete, the commercials are erased from the record addresses.

When the user, etc., enters a record command or a command to preselect a program for recording, the recording-reproducing apparatus of the embodiment presents a message indicating whether or not commercials can be cut for the specified program for improving the convenience of the user, etc. However, the invention is not limited to the mode. Information indicating the attribute of the broadcast program specified by the user, etc., namely, a "bilingual" broadcast or a "non-bilingual" broadcast may be provided in place of the message indicating whether or not commercials can be cut.

The recording-reproducing apparatus of the embodiment acquires electronic program guide data distributed through the broadcast network and uses the acquired electronic program guide data to check whether or not commercials contained in the program to be recorded or preselected for recording can be cut and provide the information as to whether or not commercials can be cut. However, the invention is not limited to the mode of acquiring the electronic program guide data through the broadcast network. As a specific example, a communication circuit connected to a communication network such as the Internet may be provided and electronic program guide data distributed from a predetermined site as another information providing source connected to the communication network may be stored in the electronic program guide data storage area 8b.

The recording-reproducing apparatus of the embodiment is intended for the user, etc., to preselect a program for recording, distributed by a digital multichannel television broadcast as content. However, the invention is not limited to the mode of recording a program or preselecting a program for recording, as content distributed by such a digital multichannel television broadcast.

Specifically, a communication circuit connected to a communication network of the Internet, a CATV, etc., can be provided and the user, etc., can record or preselect for recording content distributed through the Internet, the CATV, etc. A reception tuner for receiving radio broadcasts may be provided and the user, etc., may record or preselect for recording content distributed by the radio broadcast.

To record or preselect for recording content distributed through the communication network of the Internet, the CATV, etc., the electronic program guide data relevant to content distributed from a predetermined site, etc., is stored in the electronic program guide data storage area 8b and the stored electronic program guide data is used to check whether or not commercials contained in the content to be recorded or preselected for recording can be cut and provide the information as to whether or not commercials can be cut.

The recording-reproducing apparatus of the embodiment stores the electronic program guide data Depg' and the preselection data Drsv' in a storage medium such as a DVD or a hard disk for recording and reproducing information using mechanical drive section, but may be configured so as to store the data in storage section for enabling information to be stored and reproduced without using mechanical drive section, such as semiconductor memory.

In the recording-reproducing apparatus of the embodiment, the microprocessor (MPU) of the system controller 9 executes the predetermined system program, thereby exerting the commercial cut function, the function of providing the information as to whether or not commercials can be cut, the function of preselecting a program for recording, etc., and these functions are integrated into the recording-reproducing apparatus. However, the invention is not limited to the mode. In the system program, the program for exerting the functions related to commercial cut such as the commercial cut function, the function of providing the information as to whether or not commercials can be cut, and the function of preselecting a program for recording may be made an independent commercial cut program and this independent commercial cut program may be distributed through a communication network of the Internet, etc., and downloaded into the system controller of the recording-reproducing apparatus or a storage medium such as a CD or a DVD recording the independent commercial cut program may be provided for the user, etc., to install the commercial cut program in the system controller of the recording-reproducing apparatus. As the program is thus provided, it is downloaded into or installed in a personal computer comprising a so-called video capture board, etc., containing a reception tuner that can receive television or radio broadcasts or a personal computer comprising a communication function capable of receiving Internet distribution, whereby the commercial cut function, etc., of the invention can be provided for a wide range of users, etc.

Of the components of the recording-reproducing apparatus shown in FIG. 1, only the components for exerting the commercial cut function, the function of providing the information as to whether or not commercials can be cut, and the function of preselecting a program for recording may make up a commercial cut apparatus as a dedicated machine to which a separate recording-reproducing apparatus is connected for supplying content of a broadcast program, etc., with commercials cut by the commercial cut apparatus to the recording-reproducing apparatus for recording, etc., the content.

The recording-reproducing apparatus of the embodiment checks the contents of the electronic program guide data Depg' to see if the attribute of the program to be recorded or preselected for recording is a "bilingual" broadcast, and determines whether or not commercials can be cut based on the contents. However, the invention is not limited to the mode in which whether or not commercials can be cut is determined using only the "bilingual" attribute in the electronic program guide data Depg'.

Specifically, a broadcast station, etc., may distribute not only the program broadcast schedule, but also broadcast schedule time information concerning commercials in the electronic program guide data Depg' so that the recording-reproducing apparatus determines whether or not commercials can be cut based on the broadcast schedule time information concerning commercials and performs actual commercial cut processing.

The recording-reproducing apparatus of the embodiment checks whether or not the sound multiplex detection signal Dfg is "bilingual" as the method of determining change between commercial and program during program recording. However, the invention is not limited to the method of using the sound multiplex detection signal Dfg as the method of determining change between commercial and program.

Specifically, a method of superposing commercial identification information on the vertical blanking interval (VBI) of a video signal, a method of embedding commercial identification information in the image itself (Water Mark, etc.,), or the like can be applied.

As described above, according to the commercial cut apparatus and the commercial cut method of the invention, when content scheduled to be distributed based on the distribution schedule information is specified, the attribute of the specified content is retrieved from the previously recorded distribution schedule information and is provided, so that the attribute information can be provided for the user, etc., as information to determine whether or not commercials can be cut and whether or not commercials are to be cut. Thus, commercials can be cut appropriately and the convenience of the user, etc., can be improved.

According to the recording-reproducing apparatus of the invention, when the user, etc., attempts to record any desired content and specifies the desired content, the attribute of the specified content is retrieved from the previously recorded distribution schedule information and is provided, so that the attribute information can be provided for the user, etc., as information to determine whether or not commercials can be cut and whether or not commercials are to be cut. Thus, commercials can be cut appropriately for recording the content and the convenience of the user, etc., can be improved.

In the recording-reproducing apparatus of the invention, whether or not commercials can be cut is determined based on the attribute of the content and the determination result is shown, so that the convenience of the user, etc., can be improved.

In the recording-reproducing apparatus of the invention, when it is determined that commercials can be cut and the determination result is shown and the user, etc., gives a command to cut commercials in response to the shown determination result, the content with commercials removed is recorded in the record section. Thus, the range of choices of the operation of the user, etc., is extended and the convenience of the user, etc., can be improved.

The commercial cut program of the invention is distributed to (downloaded into) an apparatus comprising a microprocessor through the Internet, etc., or a storage medium recording the commercial cut program is provided for installing the commercial cut program in an apparatus comprising a microprocessor, whereby the apparatus can be provided with the commercial cut function and the commercial cut function of the invention can be provided for a wide range of users, etc.

## Claims

1. A commercial cut apparatus for removing commercials contained in content provided by an information providing source,
said commercial cut apparatus comprising:
acquisition section for acquiring distribution schedule information of the content provided by the information providing source or another information providing source;
storage section for storing the distribution schedule information acquired by said acquisition section; and
control section, when content scheduled to be distributed based on the distribution schedule information is specified, for retrieving information indicating an attribute of the specified content from the distribution schedule information stored in said storage section and providing the information indicating the attribute.

2. The commercial cut apparatus as claimed in claim 1, wherein
the distribution schedule information is electronic program guide information distributed by a broadcast network or a communication network or provided by means of a storage medium recording the information.

3. A commercial cut method for removing commercials contained in content provided by an information providing source,
said commercial cut method comprising:
a first step of acquiring distribution schedule information of the content provided by the information providing source or another information providing source;
a second step of storing the distribution schedule information acquired in said first step; and
a third step, when content scheduled to be distributed based on the distribution schedule information is specified, of retrieving information indicating an attribute of the specified content from the distribution schedule information stored in the second step and providing the information indicating the attribute.

4. The commercial cut method as claimed in claim 3, wherein
the distribution schedule information is electronic program guide information distributed by a broadcast network or a communication network or provided by means of a storage medium recording the information.

5. A recording-reproducing apparatus for removing commercials contained in content provided by an information providing source and recording the content in record section,
said recording-reproducing apparatus comprising:
acquisition section for acquiring distribution schedule information of the content providedby the information providing source or another information providing source;
storage section for storing the distribution schedule information acquired by said acquisition section; and
control section, when a command to record or preselect for recording content scheduled to be distributed based on the distribution schedule information is given, for retrieving information indicating an attribute of the content commanded to be recordedorpreselected for recording from the distribution schedule information stored in said storage section and providing the information indicating the attribute.

6. The recording-reproducing apparatus as claimed in claim 5, wherein
the distribution schedule information is electronic program guide information distributed by a broadcast network or a communication network or provided by means of a storage medium recording the information.

7. The recording-reproducing apparatus as claimed in claim 5, wherein
said control section retrieves the information indicating the attribute of the content commanded to be recorded or preselected for recording from the distribution schedule information stored in said storage section, determines whether or not commercials can be cut based on the attribute, and shows the determination result as to whether or not commercials can be cut.

8. The recording-reproducing apparatus as claimed in claim 7 wherein,
when the determination result indicating that commercials can be cut is shown and a command to cut commercials is given in response to the shown determination result, said control section causes said record section to remove commercials in the content commanded to be recorded or preselected for recording when recording the content.

9. A commercial cut program having program section for removing commercials contained in content provided by an information providing source, said program section being executed by a computer,
said commercial cut program comprising:
first program section for acquiring distribution schedule information of the content provided by the informationproviding source or another information providing source;
second program section for storing the distribution schedule information acquired by said first program section in storage section; and
third program section, when content scheduled to be distributed based on the distribution schedule information is specified, for retrieving information indicating an attribute of the specified content from the distribution schedule information stored in said storage section and providing the information indicating the attribute.

10. The commercial cut program as claimed in claim 9, wherein
the distribution schedule information is electronic program guide information distributed by a broadcast network or a communication network or provided by means of a storage medium recording the information.

11. The recording-reproducing apparatus as claimed in claim 5, wherein
a program for recording is distributed by a digital multichannel television broadcast as content.

12. The recording-reproducing apparatus as claimed in claim 5, further comprising:
a communication circuit connected to a communication network of the Internet or a CATV.

13. The recording-reproducing apparatus as claimed in claim 5, further comprising:
a reception tuner for receiving radio broadcasts.
